**Europäisches Patentamt**

**European Patent Office**

**Office européen des brevets**

(19)

(11) Veröffentlichungsnummer : **0 324 087 B1**

(12)

# EUROPÄISCHE PATENTSCHRIFT

(45) Veröffentlichungstag der Patentschrift :
30.10.91 Patentblatt 91/44

(51) Int. Cl.⁵ : **G01N 11/10**

(21) Anmeldenummer : **88119574.7**

(22) Anmeldetag : **24.11.88**

(54) Verfahren und Vorrichtung zum Messen der Viskosität von Stoffen.

Verbunden mit 88910028.5/0386089
(europäische
Anmeldenummer/Veröffentlichungsnummer)
durch Entscheidung vom 17.12.90.

(30) Priorität : **11.01.88 DE 3800474**

(43) Veröffentlichungstag der Anmeldung :
**19.07.89 Patentblatt 89/29**

(45) Bekanntmachung des Hinweises auf die
Patenterteilung :
**30.10.91 Patentblatt 91/44**

(84) Benannte Vertragsstaaten :
**AT BE CH DE ES FR GB IT LI NL SE**

(56) Entgegenhaltungen :
EP-A- 0 014 437
DE-A- 3 420 341
REVUE DE PHYSIQUE APPLIQUEE, Band 19,
Nr. 3, März 1984, Seiten 253-264, Orsay, FR; M.
ADAM et al.: "Magnétorhéomètre à bille"
FARBE UND LACK, Jahrgang 83, Nr. 4, 1977,
Seiten 270-277, Hannover, DE; W. GÖRING et
al.: "Zur Messung der Viskosität von Lackfilmen während des Ablüft- und Einbrennvorganges"

(73) Patentinhaber : **BASF Lacke + Farben
Aktiengesellschaft
Max-Winkelmann-Strasse 80
W-4400 Münster (DE)**

(72) Erfinder : **Laun, Martin, Dr.
Dürerstrasse 22
W-6700 Ludwigshafen (DE)**
Erfinder : **Göring, Wolfgang, Dr.
Zum Roten Berge 34
W-4400 Münster (DE)**
Erfinder : **Dirking, Theodora
Südstrasse 22
W-4400 Münster (DE)**
Erfinder : **Streitberger, Hans-Joachim, Dr.
Linckenstrasse 21
W-4400 Münster (DE)**

(74) Vertreter : **Leifert, Elmar, Dr.
BASF Lacke + Farben AG Patentabteilung
Max-Winkelmann-Strasse 80 Postfach 61 23
W-4400 Münster (DE)**

## Beschreibung

Die Erfindung bezieht sich auf ein Verfahren zur Messung der effektiven Viskosität und der elastischen Eigenschaften von Beschichtungen gemäß dem Oberbegriff des Hauptanspruches sowie auf eine Vorrichtung zur Durchführung dieses Verfahrens.

An den Korrosionsschutz und die optischen Eigenschaften von Industrie-Lackierungen werden sehr hohe Anforderungen gestellt. Die Lackierungen müssen gut verlaufen und dürfen keine Oberflächenstörungen, wie Kochblasen und Krater, und keine Läuferbildung aufweisen. Die Kantenabdeckung durch die Beschichtung muß möglichst gut sein. Diese geforderten Eigenschaften hängen wesentlich vom zeitlichen Verlauf des Fließverhaltens der applizierten Beschichtung während der Trocknung ab. Das Fließverhalten und sein zeitlicher Verlauf werden bestimmt durch die qualitative und quantitative Zusammensetzung des Rezeptes des Anstrichstoffes und durch die Bedingungen beim Trocknungsvorgang (Dauer der Ablüftphase, Einbrennzeit, Einbrenntemperatur usw.).

Die Messung des Fließverhaltens von Beschichtungen nach der "Rollende-Kugel-Methode" geht auf Arbeiten aus dem Jahre 1936 zurück. Dieses Meßverfahren ist seitdem häufig eingesetzt worden. Eine rechnergesteuerte Meßapparatur ist in der DE 3420341C2 beschrieben und gestattet es, die scheinbare Viskosität während des Ablüft- und Einbrennvorganges quantitativ zu bestimmen. Dabei wird ein beschichtetes Blech unter einem definierten Winkel (z.B 30°) schräg zur Horizontalen gestellt und die Rollbewegung einer Stahlkugel im Lackfilm durch die Drehung des Bleches mit Hilfe eines motorischen Antriebs um eine zu seiner Ebene senkrechte und durch seinen Mittelpunkt führende Achse kompensiert. Eine punktförmige Lichtquelle sowie ein zugehöriger Lichtdetektor dienen in Verbindung mit einer elektrischen Einheit zur Steuerung des motorischen Antriebs, wobei der Motor das beschichtete Blech entgegen der Bewegungsrichtung der Kugel dreht, um diese in vertikaler Richtung auf ungefähr der gleichen Stelle zu halten. Die Drehgeschwindigkeit des beschichteten Bleches ist umgekehrt proportional zur Viskosität der Beschichtung. Auf diese Weise kann die Filmviskosität als Funktion der Zeit- bzw. Temperatur des Films gemessen werden.

Dieses Meßverfahren hat den Nachteil, daß die Schrägstellung des beschichteten Bleches sowohl die Bildung von Läufern als auch das Herabfallen der relativ schweren Lösemitteldämpfe beim Vorgang der physikalischen Trocknung nach sich zieht. So kann es vorkommen, daß die zur Messung verwendeten Stahlkugeln in Bereichen unterschiedlicher Schichtdicke laufen, was sich in der Meßgenauigkeit ungünstig bemerkbar macht.

Der Erfindung liegt die Aufgabe zugrunde, ein Meßverfahren und eine Meßvorrichtung zu schaffen, bei welcher die störende Läuferbildung als auch das Herunterfallen von Lösemitteldämpfen vermieden wird und bei welchem die Größe der auf die Kugel wirkenden Kraft in einem weiten Bereich einstellbar ist, so daß eine Erweiterung des Viskositätsmeßbereiches erreichbar ist.

Diese der Erfindung zugrundeliegende Aufgabe wird durch die Lehre des Hauptanspruches gelöst.

Eine Vorrichtung zur Durchführung des erfindungsgemäßen Verfahrens wird im Anspruch 3 und den Unteransprüchen erläutert.

Mit anderen Worten ausgedrückt, wird durch den erfindungsgemäßen Vorschlag erreicht, daß das beschichtete Substrat horizontal angeordnet werden kann und damit sowohl die störende Läuferbildung als auch das Herunterfallen von Lösemitteldämpfen vermieden wird. Die Größe der auf die aus ferromagnetischem Werstoff bestehenden Kugel wirkenden magnetischen Kraft ist in einem weiten Bereich einstellbar, was eine wesentliche Erweiterung des Viskositätsmeßbereiches von etwa 10 mPas auf etwa 1000 Pas oder mehr bedeutet. Damit gelingt es, einen größeren, bisher unbekannten Bereich der Viskosität während des Einbrennvorganges der Beschichtung als mit den bisherigen Meßapparaten technisch zu erfassen.

Die Messung der Geschwindigkeit der Kugel im viskosen Lackfilm kann on-line erfolgen und das Meßverfahren ist daher voll automatisierbar.

Ein Ausführungsbeispiel der Erfindung wird nachfolgend anhand der Zeichnungen erläutert. Die Zeichnungen zeigen in

Fig. 1      eine Skizze der magnetischen Meßanordnung und in
Fig. 2      eine mit der erfindungsgemäßen Meßvorrichtung erhaltene Kurvendarstellung.

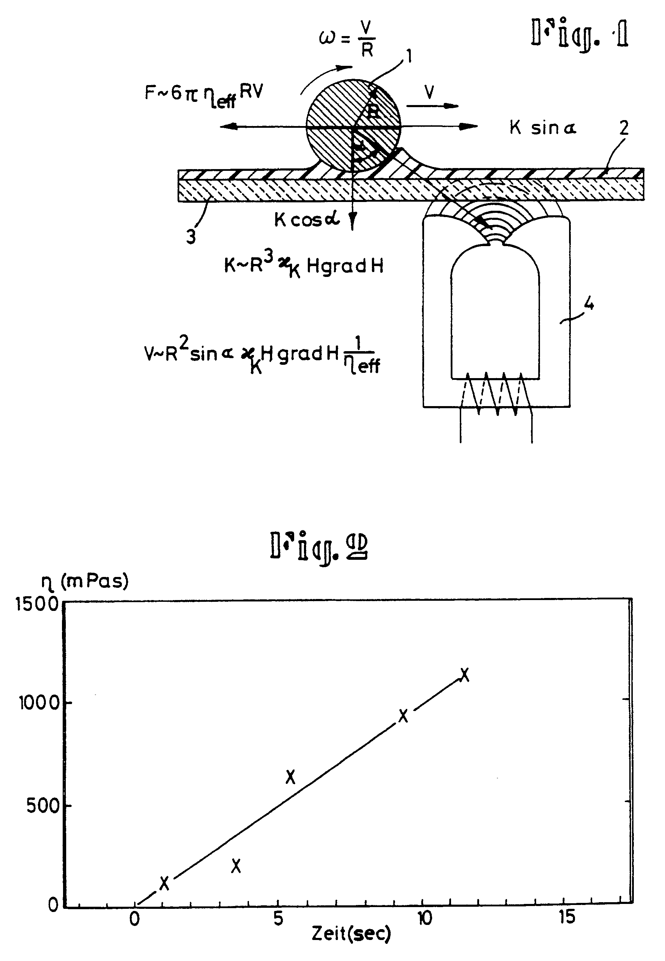

In Fig. 1 sind die wesentlichen Teile der Meßapparatur dargestellt. Eine magnetisierbare Kugel 1 wird in einer Beschichtung 2 bei Bewegung eines horizontal angeordneten, aus nicht ferromagnetischem Werkstoff, z.B. Glas bestehenden Substrates 3 unter dem Einfluß des Feldgradienten eines unterhalb des Substrates 3 angeordneten Permanent- oder Elektromagneten 4 zur Rollbewegung angeregt. Die Bewegungsgeschwindigkeit $\underline{v}$ des Substrates 3 wird bei feststehendem Magneten 4 so geregelt, daß die Kugel 1 in einem konstanten Abstand $\Delta \underline{x}$ von der Ruhelage rollend gehalten wird. Dabei wird die Kugelposition mittels eines berührungs-

2

losen Sensors erfaßt. Dies entspricht einem Versuch mit konstanter magnetischer Antriebskraft auf die Kugel 1, wobei sich eine Rollgeschwindigkeit einstellt, die proportional zum Kehrwert der effektiven Beschichtungsviskosität ist. Die Bewegung des Substrates 3 durch einen Servomotorantrieb kann entweder eine reine Linearbewegung oder eine Rotation (Kreisbahn) sein. Es kann aber auch eine Kombination aus beiden (z.B. Spiralbahn) sein.

Die Erzeugung des Feldes durch einen Elektromagneten 4 hat den Vorteil, daß die auf die Kugel 1 wirkende Kraft über den Spulenstrom in einem weiten Bereich variiert und geregelt werden kann. Dies bedeutet einen wesentlichen Vorteil gegenüber den bisherigen Meßapparaturen, bei denen eine konstante Kraft, nämlich die Schwerkraft, auf die rollende Kugel wirkt. Dadurch ergibt sich erfindungsgemäß eine Ausweitung des Viskositätsmeßbereiches auf Werte zwischen 10 mPas und 1000 Pas oder mehr.

Das erfindungsgemäße Meßverfahren beinhaltet aber noch weitere Möglichkeiten zur Anpassung der Antriebskraft bzw. Rollgeschwindigkeit der Kugel 1 an die variable Beschichtungsviskosität :

a)   Wahl einer anderen Auslenkung $\Delta \underline{X}$

b)   Wahl einer anderen Substratdicke

c)   Wahl einer anderen Polschuhgeometrie

d)   Wahl eines anderen Kugeldurchmessers

e)   Wahl eines Kugelmaterials mit anderer magnetischer Permeabilität

So ergeben sich folgende Vorteile gegenüber der zum Stand der Technik gehörenden Verfahrensweise, die mit schrägem Blech arbeitet :

1.   Keine Läuferbildung in der Beschichtung, z.B. einem Lackfilm.

2.   Kein Herabfallen der relativ schweren Lösemitteldämpfe bzw. keine Bildung von Lösemittelfallen.

3.   on-line-Messung der effektiven Viskosität.

4.   Die Größe der auf die Kugel 1 wirkenden magnetischen Kraft ist in weitem Bereich einstellbar.

5.   Viskositätsbereich 10 mPas bis 1000 Pas oder mehr.

6.   Seitliche Fokussierung der Kugel 1 durch das Magnetfeld.

7.   Meßverfahren ist voll automatisierbar

8.   Meßverfahren kann auf oszillatorische Rollbewegungen zur Messung der Viskoelastizität erweitert werden.

Fig. 2 zeigt eine mit der beschriebenen magnetischen Meßvorrichtung erhaltene Kurvendarstellung. Für Ölfilme (Filmdicke 250 μm) unterschiedlicher Viskosität ist die Kugelrollzeit unter dem Einfluß des Magnetfeldes wiedergegeben, wobei ein Permanent-Magnet benutzt worden war. Es wurden Kugeln 1 des Durchmessers 2,5 mm aus Weicheisen eingesetzt. Für die Messungen wurden fünf Kalibrieröle unterschiedlicher Viskosität im Bereich von 80-1200 mPas gewählt. Die Ölfilme waren mit einem Ziehlineal auf Glasplatten 3 der Dicke 1 mm hergestellt worden. Die Meßtemperatur betrug 20,0°C, die Länge der Meßstrecke $\Delta \underline{x}$ betrug 3 cm.

Der physikalisch-mathematische Zusammenhang, der in Fig. 1 wiedergegeben ist, bedeutet, daß die Rollgeschwindigkeit der Kugel 1 umgekehrt proportional der effektiven Viskosität der Beschichtung 2 ist. Dieser theoretisch herzuleitende lineare Zusammenhang zwischen der Meßzeit t (bzw. Kugelrollgeschwindigkeit $\underline{v}$) und der Viskosität der Beschichtung 2, z.B. der Ölfilme, wird durch die Meßergebnisse gemäß Fig. 2 experimentell bestätigt. Daraus resultiert die Brauchbarkeit des magnetischen Meßverfahrens für den geforderten Anwendungszweck zur Bestimmung der Viskosität von Beschichtungen.

In der Einbrennphase der Beschichtung im Temperaturbereich von 200°C (oder auch bis 300°C) ist die Abnahme der Magnetisierung der ferromagnetischen Eisenkugeln zu berücksichtigen. Diese Temperaturabhängigkeit der magnetischen Suszeptibilität ist bekannt und wird über die Software mittels des Rechners bei der Berechnung der effektiven Viskosität berücksichtigt.

Die Meßvorrichtung läßt sich derart ausbauen, daß die Kugel 1 unter dem zusätzlichen Einfluß eines lateralen magnetischen Wechselfeldes eines Elektromagneten 4 oszillatorische Rollbewegungen ausführt. Auf diese Weise können die elastischen Eigenschaften von Beschichtungen 2 bestimmt werden. Real- und Imaginärteil des komplexen Schermoduls (Speicher- bzw. Verlustmodul) als Funktion der Frequenz sind bestimmbar.

**Patentansprüche**

1. Verfahren zur Messung der effektiven Viskosität und der elastischen Eigenschaften von Beschichtungen während der Ablüft- und Einbrennphase mit einem Substrat, auf welchem die zu untersuchende Beschichtung angebracht ist und auf welcher sich eine Kugel abwälzt, dadurch gekennzeichnet, daß eine magnetisierbare Kugel nach Auslenkung aus ihrer Ruhelage im Magnetfeld bei Bewegung des horizontal angeordneten Substrates unter dem Einfluß des Feldgradienten eines unterhalb des Substrates angeordneten Permanent- oder Elektromagneten zur Rollbewegung im Beschichtungsfilm angeregt wird, die Bewegungsgeschwindigkeit des Substrates bei feststehendem Magneten so geregelt wird, daß die Kugel in einem konstanten Abstand von der Ruhelage rollend gehalten wird und die Kugelposition mittels eines berührungslosen Sensors, der die Vorschubgeschwindigkeit des Substrates steuert, erfaßt wird.

2. Verfahren nach Anspruch 1, dadurch gekennzeichnet, daß die Kugel unter dem Einfluß eines zusätzlichen magnetischen Wechselfeldes eines Elektromagneten ateral-oszillatorische Rollbewegungen ausführt.

3. Vorrichtung zur Durchführung des Verfahrens nach Anspruch 1 und 2 zur Messung der effektiven Viskosität und der elastischen Eigenschaften von Beschichtungen (2) während der Ablüft- und Einbrennphase mit einem Substrat (3), auf welchem die zu untersuchende Beschichtung (2) angebracht ist und auf welcher sich eine Kugel (1) abwälzt, dadurch gekennzeichnet, daß das Substrat (3) aus einer Platte aus nicht ferromagnetischem Werkstoff besteht, die Kugel (1) aus einem ferromagnetischem Werkstoff besteht und einen Kugeldurchmesser von 1 bis 10, vorzugsweise 1,5 bis 4 mm aufweist, ein Servomotorantrieb für die Bewegung des Substrates (3) vorgesehen ist und unterhalb des Substrates ein Permanent- oder Elektromagnet (4) angeordnet ist.

4. Vorrichtung nach Anspruch 3, dadurch gekennzeichnet, daß die Kugel aus Stahl besteht und einen Kugeldurchmesser von 2,5 mm aufweist.

5. Vorrichtung nach Anspruch 3 oder 4, dadurch gekennzeichnet, daß das Substrat (3) eine reine lineare Bewegung ausführt.

6. Vorrichtung nach Anspruch 3 oder 4, dadurch gekennzeichnet, daß das Substrat eine Rotationsbewegung ausführt.

7. Vorrichtung nach Anspruch 3 bis 6, dadurch gekennzeichnet, daß das Substrat eine Kombination aus einer reinen Linearbewegung oder einer Rotationsbewegung ausführt.

8. Vorrichtung nach einem oder mehreren der Ansprüche 3 bis 7, gekennzeichnet durch einen regelbaren Elektromagneten (4), bei welchem über den Spulenstrom in einem weiten Bereich die auf die Kugel (1) wirkende Kraft variiert und geregelt werden kann.

9. Vorrichtung nach einem oder mehreren der vorhergehenden Ansprüche 3 bis 8, dadurch gekennzeichnet, daß ferromagnetische Kugelmaterialien mit anderer magnetischer Suszeptiblität eingesetzt werden.

10. Vorrichtung nach einem oder mehreren der vorhergehenden Ansprüche, dadurch gekennzeichnet, daß als nicht ferromagnetischer Werkstoff für das Substrat (3) Glas eingesetzt wird.

## Claims

1. Method of measuring the effective viscosity and the elastic properties of coatings during the flash-off phase and stoving phase using a substrate, on which the coating to be investigated is applied, and on which a sphere rolls, characterized in that after being displaced from its position of rest in the magnetic field, a magnetizable sphere is excited to a rolling motion in the film coating in conjunction with the movement of the horizontally arranged substrate under the influence of the field gradient of a permanent magnet or electromagnet arranged underneath the substrate, and in that, given fixed magnets, the speed of the substrate is regulated in such a way that the sphere is held rolling at a constant separation from the position of rest, and the position of the sphere is detected by a non-contacting sensor, which controls the feedrate of the substrate.

2. Method according to Claim 1, characterized in that the sphere executes lateral oscillatory rolling motions under the influence of an additional alternating magnetic field of an electromagnet.

3. Apparatus for carrying out the method according to Claim 1 and 2 for measuring the effective viscosity and the elastic properties of coatings (2) during the flash-off phase and stoving phase, using a substrate (3) on which the coating (2) to be investigated is applied, and on which a sphere (1) rolls, characterized in that the substrate (3) consists of a plate of non-ferromagnetic material, the sphere (1) consists of a ferromagnetic material and has a sphere diameter of 1 to 10, preferably 1.5 to 4 mm, a servomotor drive is provided for moving the substrate (3), and a permanent magnet or electromagnet (4) is arranged underneath the substrate.

4. Apparatus according to Claim 3, characterized in that the sphere consists of steel, and has a sphere diameter of 2.5 mm.

5. Apparatus according to Claim 3 or 4, characterized in that the substrate (3) executes a purely linear motion.

6. Apparatus according to Claim 3 or 4, characterized in that the substrate executes a rotational motion.

4

EP 0 324 087 B1

7. Apparatus according to Claim 3 to 6, characterized in that the substrate executes a combination of a purely linear motion or a rotational notion.

8. Apparatus according to one or more than one of Claims 3 to 7, characterized by a regulable electromagnet (4), with which the force acting on the sphere (1) can be varied and regulated over a wide range via the coil current.

9. Apparatus according to one or more than one of the preceding Claims 3 to 8, characterized in that ferromagnetic sphere materials of different magnetic susceptibility are used.

10. Apparatus according to one or more than one of the preceding claims, characterized in that glass is used as non-ferromagnetic material for the substrate (3).

## Revendications

1. Procédé pour la mesure de la viscosité effective et des propriétés élastiques de revêtements pendant la phase de ventilation et de cuisson, avec un substrat sur lequel le revêtement à étudier est appliqué et sur lequel on fait rouler une bille, caractérisé par le fait qu'on excite une bille magnétisable, après déviation hors de sa position de repos dans le champ magnétique lors du mouvement du substrat disposé horizontalement, sous l'influence du gradient de champ d'un aimant permanent ou électroaimant disposé au-dessous du substrat, pour le mouvement de roulement dans le film de revêtement, qu'on règle la vitesse de mouvement du substrat pour un aimant stationnaire de sorte que la bille soit maintenue roulante dans une distance constante de la position de repos, et qu'on détecte la position de la bille au moyen d'un détecteur sans contact, qui commande la vitesse d'avance du substrat.

2. Procédé selon la revendication 1, caractérisé par le fait que la bille exécute, sous l'influence d'un champ alternatif magnétique additionnel d'un électro-aimant, des mouvements de roulement oscillatoires de façon latérale.

3. Dispositif pour la mise en oeuvre du procédé tel que défini à l'une des revendications 1 et 2, pour la mesure de la viscosité effective et des propriétés élastiques de revêtements (2) pendant la phase de ventilation et de cuisson, avec un substrat (3) sur lequel le revêtement (2) à étudier est appliqué et sur lequel on fait rouler une bille (1), caractérisé par le fait que le substrat (3) se compose d'une plaque en un matériau non ferromagnétique, que la bille (1) se compose d'un matériau ferromagnétique et présente un diamètre de bille de 1 à 10, de préférence, de 1,5 à 4 mm, qu'il est prévu une commande à servomoteur pour le mouvement du substrat (3) et qu'un aimant permanent ou électro-aimant (4) est disposé au-dessous du substrat.

4. Dispositif selon la revendication 3, caractérisé par le fait que la bille se compose d'acier et présente un diamètre de bille de 2,5 mm.

5. Dispositif selon l'une des revendications 3 ou 4, caractérisé par le fait que le substrat (3) exécute un mouvement linéaire simple.

6. Dispositif selon l'une des revendications 3 ou 4, caractérisé par le fait que le substrat exécute un mouvement de rotation.

7. Dispositif selon l'une des revendications 3 à 6, caractérisé par le fait que le substrat exécute une combinaison d'un mouvement linéaire simple ou d'un mouvement de rotation.

8. Dispositif selon l'une ou plusieurs des revendications 3 à 7, caractérisé par un électroaimant (4) réglable, par lequel on peut faire varier et régler, par l'intermédiaire du courant de bobine, dans une large plage, la force agissant sur la bille (1).

9. Dispositif selon l'une ou plusieurs des revendications précédentes 3 à 8, caractérisé par le fait que des matières de bille ferromagnétiques avec une autre susceptibilité magnétique sont utilisées.

10. Dispositif selon l'une ou plusieurs des revendications précédentes, caractérisé par le fait que le verre est utilisé comme matériau non ferromagnétique pour le substrat (3).

5

Fig. 1

$$\omega = \frac{V}{R}$$

$$F \sim 6\pi\, \eta_{eff}\, RV$$

$$K \sin\alpha$$

$$K \cos\alpha$$

$$K \sim R^3\, \varkappa_K\, H\,\mathrm{grad}\,H$$

$$V \sim R^2 \sin\alpha\; \varkappa_K\, H\,\mathrm{grad}\,H\; \frac{1}{\eta_{eff}}$$

Fig. 2

$\eta$ (mPas)

Zeit(sec)